# EUROPÄISCHE PATENTSCHRIFT

(11) **EP 0 514 899 B1**
(45) Veröffentlichungstag und Bekanntmachung des Hinweises auf die Patenterteilung: **22.03.1995**
(21) Anmeldenummer: 92108609.6
(22) Anmeldetag: 21.05.1992
(51) Int. Cl.: A01K 91/18

(54) **Vorrichtung zum Ausbringen und Holen einer Angelleine für Langleinen-Fischerei sowie Angelleine dafür**
Installation for unwinding and reeling in a fishing line for longline fishing and fishing line for that
Installation pour dévider et haler une ligne de pêche pour la pêche à la palangre et ligne de pêche pour celle-ci

(30) Priorität: 21.05.1991 DE 4116538
(43) Veröffentlichungstag der Anmeldung: 25.11.1992
(73) Patentinhaber: ZEWI-PLAST KUNSTSTOFFVERARBEITUNG GmbH, D-33415 Verl (DE)
(72) Erfinder: Zimmer, Detlef, W-4837 Verl 1 (DE); Stamer, Hartwig, Dr. Dipl.-Ing., O-2530 Warnemünde (DE); Gabriel,Otto, Dr. Dipl.-Ing., O-2520 Rostock 21 (DE)
(74) Vertreter: Strauss, Hans-Jochen, Dipl.-Phys., Dr.

(56) Entgegenhaltungen:
- DE-U- 8 912 375
- FR-A- 2 633 155
- GB-A- 2 035 021
- GB-A- 2 120 061

## Beschreibung

Die Erfindung betrifft eine Vorrichtung zum Aufbewahren, Ausbringen und Aufwickeln einer insbesondere monofile Angelleine für Langleinenfischerei an Bord eines Fangschiffes mit angetriebener Trommelwinde, Vereinzelung für Mundschnur mit Haken und auf einer der Stirnseiten der Trommelwinde vorgesehen Hakenmagazinen, und mit einer Angelleine mit einer Vielzahl von in Abständen zueinander angeordneten, insbesondere kugelartigen Stopper oder Stopper-Paare, in deren Bereich Mundschnüre in entsprechender Anzahl mit je einem Vorfach mit Fanghaken angeschlagen sind, wobei jede Mundschnur mit Mitteln zum Anleinen an die Angelleine versehen ist, und Mittel zum Anschlagen des Vorfaches mit Haken aufweist.

Um Fische ohne Benutzung von über lange Strecken ausgelegte Treibnetze, in denen sich Fische aber auch Schildkröten, Meeressäuger und sogar Tauchvögel verfangen, von denen zumindest einige Arten geschützt sind, oder die aus anderen Gründen nicht gefangen werden sollen oder dürfen, fangen zu können, setzt die Langleinenfischerei Angelleinen, wie z.B. in dem DE-GM 88 12 375 beschrieben werden, ein. Zum Ausbringen sind Vorrichtungen bekannt, mit denen die Angelleine in Buchten oder in Ringen in einem Kasten abgelegt an Bord des Fangschiffes aufbewahrt werden, an dessen Wände die Fanghaken eingehängt werden, von denen sie zum Ausbringen wieder abgenommen werden können. Dabei bereiten die Mundschnüre Schwierigkeiten, die sich verheddern können und so das Einholen und/oder das Ausbringen u.a. wegen der damit verbundenen erheblichen Verletzungsgefahr erschweren, wenn nicht sogar verhindern.

Um dies zu umgehen, ist bekannt, die Mundschnüre von der Angelleine abzunehmen, so daß die Angelleine selbst abgelegt oder sogar auf Trommelwinden aufgetrommelt werden kann, während die Mundschnüre gesondert abgelegt werden. Dieses Vorgehen erfordert zusätzliche Handgriffe sowohl bei dem Einholen der Angelleine als auch bei dem Ausbringen. Aus der JP 55-71432 sowie der Druckschrift der Mustad u. Sohn S.A. Giovik/Norwegen "Mustad-Autoline-System" ist auch bekannt, derartige Angelleinen in Buchten aufzuhängen, wobei die Fanghaken der Mundschnüre in hochgelegten Hakenspeicherschienen hängend die Last der Buchten zu tragen haben. Hierbei entfällt zwar das Abnehmen und das Wiederankoppeln der Mundschnüre, jedoch muß wegen der beschränkten Höhe an Bord eines Schiffes die Länge der hängenden Buchten beschränkt bleiben, so daß die Abstände zwischen den mit den Haken versehenen Mundschnüren im wesentlichen durch die doppelte Länge der Buchten bestimmt ist; aus eben diesem Grund ist auch die Länge der Mundschnüre beschränkt, so daß Angelleinen mit größeren Mundschnüren mit derartigen Anordnungen nicht beherrscht werden können, zumal beim Holen der Angelleinen die gefangenen Fische von den Haken abgenommen und diese beim Ausbringen wieder beködert werden müssen.

Die GB-PS 21 20 061 sowie die DD-PS 266 725 lehren schließlich ein Auftrommeln der Angelleine einschließlich der Mundschnüre; um ein Verheddern der Mundschnüre zu vermeiden, werden hier Mundschnüre und Haken, die an der Peripherie einer der Stirnscheiben der Leinen-Trommel abgelegt werden, geführt. Auch bei dieser Art der Auftrommelung ist nicht zu vermeiden, daß sowohl Abstand als auch Länge der Mundschnüre begrenzt ist, so daß keine für den Fang auch größerer Fische notwendigen längeren Mundschnüre angeschlagen werden können.

Schließlich lehrt die GB-A-2 221 132 (entspr.: FR-A-2 633 155) eine Vorrichtung zum Auftrommeln einer derartigen Angelleine, wobei die Mundschnüre, die über dreh- und schwenkbare Gelenke mit der Angelleine verbunden sind, angeschlagen bleiben und deren Haken in einem Hakenmagazin abgelegt werden. Dazu wird eine Trommelwinde eingesetzt, deren Windentrommel als Angelleinenspeicher dient und deren eine Stirnscheibe mit radialen Hakenspeichern versehen als Hakenmagazin ausgebildet ist. Beim Holen der Leine werden die Mundschnüre mit ihren Fanghaken von der Angelleine separiert und jede der Mundschnüre mit Haken getrennt von der Angelleine, jedoch an diese angeschlagen über Mundschnurführungen zu der Trommelwinde geführt, wobei die Angelleine auf diese aufgetrommelt wird, während die Haken in die radialen Hakenspeicher einlaufen und dort magaziniert werden. Beim Ausbringen erfolgt der Vorgang in umgekehrter Weise: die abgetrommelte Angelleine übt über die Mundschnur einen Zug auf den Fanghaken aus, der dadurch gelöst und dem Magazin entnommen wird.

Derartige, im Regelfall kilometerlange Angelleinen werden von einem Schiff in dem zu befischenden Gewässer ausgebracht; sie sind mit einer Vielzahl von in Abständen voneinander angeordneten Mundschnüren versehen, an deren freien Enden die Angelhaken vorgesehen sind, wobei die Abstände der Mundschnüre von den auf der Angelleine vorgesehenen kugelartigen Verdickungen, zwischen denen die Mundschnüre angeleint sind, vorgegeben werden. Die an den Angelhaken gefangenen Fische können jedoch aufgrund ihrer noch vorhandenen Bewegungs-Freiheitsgrade ein unerwünschtes Vertwisten der Mundschnüre bewirken, wenn diese nicht genügenden Abstand voneinander haben oder nicht hinreichend frei bewegbar an die Angelleine angeschlagen sind. Weiter sind übergroße Kräfte, die etwa bei einem Verhaken der Fanghaken an einem Hindernis oder durch gefangene Großfische, deren Einbringen mit der Gefahr für die Angelleine verbunden ist, zu vermeiden, um die Angelleine nicht zu gefährden; dazu dient das Vorfach als "Sollbruchstelle", das in derartigen Fällen bricht und so Gefahren für die Angelleine aufhebt.

Hier setzt die Erfindung ein, der die Aufgabe zugrunde liegt, eine Vorrichtung anzugeben, mit der derartige Angelleinen mit einer Vielzahl langer Mundschnüre mit endständigen Mundhaken an Bord des Fangschiffes aufbewahrt, ausgebracht und nach Holen und Abnehmen der gefangenen Fische wieder aufgewickelt werden können, ohne daß die Angelleine mit den Mundschnüren und ihren Mundhaken unklar werden; weiter soll die Angelleine für Langleinen-Fischerei so weitergebildet werden, daß die Bewegbarkeit der Mundschnüre an der Angelleine verbessert wird, daß die Anbindung des Angelhakens an die Mundschnur über ein als Sollbruchstelle wirkendes Vorfach erfolgt.

Die Grundaufgabe wird von den im Kennzeichen des Hauptanspruchs angegebenen Merkmalen gelöst; Weiterbildungen und die Lösungen der weitergeführten Aufgabe beschreiben die Unteransprüche.

Eine bevorzugt anzuwendende Vorrichtung zum Aufbewahren, Ausbringen und Aufwickeln der Angelleine an Bord eines Fangschiffes mit angetriebener Trommelwinde, Separierung für Mundschnur mit Fanghaken und auf den Stirnseiten der Trommelwinde vorgesehenen Fang-Hakenmagazinen, ist dadurch gekennzeichnet, daß die Angelleine über mindestens eine Umlenkrolle und Legeeinrichtung und die Fanghaken über eine Fanghaken-Leitschiene geführt sind, wobei die Fanghaken-Leitschiene eine einen manuellen Eingriff zugängliche Pufferstrecke bildet und den Fanghaken-Separator und den Fanghaken-Abgreifpunkt miteinander verbindet. Mit dieser Ausbildung wird an Bord eine von der Bahn der Angelleine abweichende Führung für die Fanghaken geschaffen die gleichzeitig eine Pufferstrecke für die Mundschnüre, von deren Haken gefangene Fische (und auch unverbrauchte Köder) bereits abgenommen sind, bildet, längs der beispielsweise gebrochene Vorfächer oder beschädigte Mundschnüre ersetzt werden können. Dabei ist es vorteilhaft, wenn Fanghaken-Separator und Umlenkrolle für die Angelleine in Bezug auf den Fanghakenabgreifpunkt längs der Holrichtung und/oder quer dazu verschiebbar sind. Durch die Verschiebbarkeit können die geometrischen Verhältnisse den Bord- und Angelleinen-Gegebenheiten so angepaßt werden, daß beim Holen der Angelleine deren Mundschnüre wegen des Zuges der über die Fanghaken-Leitschiene gleitenden Fanghaken geführt werden und nicht verheddern können.

Eine vorteilhafte Weiterbildung ist dadurch gegeben, daß die Angelleinen-Umlenkrolle als angetriebene Angelleinen-Holrolle ausgebildet ist, wobei die Trommelwinde synchron zur Angelleine mitläuft, die vorzugsweise einen eigenen Antrieb aufweist. Durch diese angetriebene Holrolle wird der Zug von der Trommelwinde genommen, auf die dann die Angelleine von einer Legevorrichtung im wesentlichen kraftfrei aufgelegt wird. Diese Holrolle wird dabei vorteilhaft derart ausgebildet, daß die Führungsrille im Grund spitzwinklig ausgebildet ist, deren Flanken sich in Art einer spitzwinkligen Wangenführung erweitern, und an die sich eine weitere bis an den Umfang reichende, spitzwinklige Wangenführung anschließt, wobei zwischen beiden ein stumpfwinkliger Übergang, der vorzugsweise auch konkav ausgebildet sein kann, vorgesehen ist. Zur Verbesserung der Reibung bzw. des Klemmens zwischen der zu holenden Angelleine und der Angelleinen-Hol- und Umlenkrolle ist vorzugsweise mindestens eine der Flanken der inneren Keilrille, der äußeren Keilrille und/oder des stumpfwinkligen Überganges gerändelt oder sägezahnartig ausgebildet. Durch diese Ausbildung wird die Reibung erhöht und ein Klemmwirkung erreicht, die ein sicheres Holen der Angelleine mittels der Angelleinen- Hol- und Umlenkrolle gewährleistet.

Dabei ist es vorteilhaft, wenn der Angelleinen-Hol- und Umlenkrolle eine federkraftbelastete, ausklinkbare Mundschnur-Schlaufenfalle und ein Angelleinen-Leitfinger nachgeschaltet sind, wobei die als Angelleinenspeicher mit Fanghakenmagazin ausgebildete Trommelwinde mit der Holrolle über einen Antrieb oder getrennte Antriebe synchronisiert zusammenwirken. Diese Anordnung erlaubt ein störungsfreies Überführen sowohl der Mundschnur als auch der mit den Mundschnüren verbundenen Fanghaken von der Fanghaken-Gleitschiene in eines der radialen Hakenmagazine der Aufwickeltrommel.

Vorteilhaft werden die Hakenmagazine derart ausgebildet, daß jedes der Hakenmagazine mit einem Längsschlitz versehen ist, und einen labyrinthartigen Querschnitt aufweist und dessen Hakensitz durch zwei Schienen gebildet ist, von denen eine im Körper des Fanghaken-Magazins verläuft. Der labyrinth-ähnliche Querschnitt wird von mindestens einem Schenkel einer der Doppelschienen gebildet, der den Schlitz einseitig begrenzend, in das Innere des Magazins geführt ist. Dieser Schenkel bildet die Aufnahme für das etwa U-förmige Hakenteil des Fanghakens. Um ein sicheres Führen, Halten und Klemmen des magazinierten Hakens zu erreichen, wird vorteilhaft eine der Doppelschienen, vorzugsweise die äußere, starr ausgebildet und in Richtung des Schaftes des Fanghakens geneigt, wobei deren äußeres übergreifendes Ende den Hakenabgreifpunkt der Leitschiene berührt, während die andere der Doppelschienen, vorzugsweise die innere, zumindest im Bereich der Überlappung eine elastische Lippe aufweist, deren elastische Kraft klemmend auf den Schaft der Fanghaken wirkt, wobei vorzugsweise die Doppelschienen zwei Schalen des Fanghakenmagazins bilden, wobei beide Schalen zum Anpassen des Magazines an die Größe der zu magazinierenden Fanghaken gegeneinander verschiebbar und in der gewünschten Position festlegbar sind. Damit übergreift die elastische Lippe den Schlitz des Hakenmagazins und klemmt die magazinierten Haken so ein, daß diese z.B. bei höheren Drehgeschwindigkeiten der Trommelwinde nicht ausgeschleudert werden. Mit der zweischaligen Ausbildung kann ein Magazin an verschiedene Haken-Abmessungen durch einfaches Justieren angepaßt werden. Dieses Justieren erlaubt auch ein Einstellen der Weite des die Fanghaken aufnehmenden Spaltes und der die magazinierten Haken haltenden Klemmung.

Zum Einholen und Aufwickeln der Angelleine mit der Vorrichtung wird diese mit der angetriebenen Angelleinen- Hol- und Umlenkrolle eingeholt und auf die Aufwickeltrommel der Trommelwinde aufgelegt; nach Abnahme der gefangenen Fische (und nach Entfernen noch vorhandener, unverbrauchter Köder) von den Fanghaken der Mundschnüre werden diese mit der Angelleine zusammen in einer Rinne geführt, bis die Haken der Mundschnüre am Ende der Rinne auf die Gleitschiene übergeben werden, wobei über den Zug der von der Trommelwinde aufgewickelten Angelleine und der Mundschnüre die Fanghaken über die Fanghaken-Gleitschiene zu dem Fanghakenübergabepunkt gezogen und dort von den Fanghakengreifern jeweils einem der Hakenmagazine übergeben und dort über weiteren Mundschnurzug in die unterste Position gebracht werden, wobei die Mundschnüre unter der eigenen Spannung aufgrund der seitlichen Versetzung von Aufwickeltrommel und Angelleinen-Bahn über die Angelleinen-Hol- und Umlenkrolle gehoben und im wesentlichen mittels einer Mundschnur-Schlaufenfalle gespannt gehalten werden.

Nach der Erfindung sind die Mittel zum Anleinen der Mundschnüre als Anleinschlaufen ausgebildet, deren angelleinenseitigen Enden je eine Öse bilden, die die Angelleine als Doppelösen beidseits eines Stopper bzw. als Einfachöse zwischen den Stoppern eines Paares umgreifen, und die an ihrem entgegengesetzten Ende eine Aufnahme für das angelleinenseitige, mit mindestens einem verdickten Kopf versehenen Ende der Mundschnur aufweisen, wobei die Anleinöse als elastische Drahtschlaufe zum Einhängen der Mundschnur ausgebildet, etwa die Form eines eingeschnürten Tropfens aufweist, mit einer Bauchöffnung größer als der verdickte Kopf des angelleinenseitigen Endes der Mundschnur, mit einer Einschnüröffnung kleiner als der Durchmesser der Mundschnur, und mit einer Spitzenöffnung größer als der Durchmesser der Mundschnur, jedoch kleiner als deren verdickter Kopf. Die Anleinung der Mundschnüre ist zwischen den Stoppern eines Paares vorgesehen, bei der die Anleinöse mit einer Öse versehen ist, die zwischen zwei durch die Leinen-Verdickung gebildeten Begrenzungs-Stopper (Stopper-Paar) um die Langleine gelegt und zugedrückt ist; alternativ ist die Anleinung der Mundschnüre an einem der einzelnen Stopper der Langleine vorgesehen, bei der die Anleinöse an ihrer der Angelleine zugewandten Seite mit einer Doppel-Öse versehen ist, die um die Langleine gelegt eine der durch die Leinen-Verdickung gebildeten Begrenzungs-Stopper umgreift und zugedrückt ist. Diese Anleinöse gestattet ein leichtes Einhängen und ein sicheres Halten der Mundschnur, wobei die Anleinöse über zu Ösen gebogenen Enden die Angelleine umgreift und so ein Drehgelenk bildet, das die Schwenkbarkeit der der Mundschnur um die Angelleine sicherstellt. Durch das Einhängen der Mundschnur in den der Angelleine abgewandten Teil der Anleinöse wird ein weiteres Drehgelenk geschaffen, das die freie Drehbarkeit der Mundschnur um sich selbst gewährleistet. Damit ist auch hier die freie Beweglichkeit der Mundschnur sichergestellt, wobei in beiden Fällen ein Zug von einem gefangenen Fisch klemmend auf die Einhängung einwirkt und die Sicherheit gerade nach einem Fang vergrößert. Eine vorteilhafte Weiterbildung, mit der eine Verbesserung der Drehbarkeit der Mundschnur erreicht wird, wird durch ein Abwinkeln der das angelleinenseitige Ende der Mundschnur aufnehmenden elastischen Drahtschlaufe der Anleinöse erreicht. Die Mundschnüre werden in beiden Fällen vor dem Einsatz an die Angelleine angeleint, zum Einsatz werden allenfalls die Vorfächer ergänzt und die Haken beködert.

Für das Anleinen der Mundschnüre sind jeweils zwei in einen geringeren Abstand voneinander angeordnete Begrenzungs-Stopper (Stopper-Paar) der Angelleine für die Langleinenfischerei vorgesehen, dadurch kann die das angelleinenseitige Ende der Mundschnur aufnehmende Anleinöse mit einer Öse, die um die Langleine gelegt und zugedrückt ist, versehen sein. Statt die Anleinung zwischen zwei der kugelförmigen Begrenzungs-Stopper vorzunehmen, kann auch eine einzelne dieser kugelförmigen Verdickungen als Anleinpunkt dienen. Um dies zu erreichen, wird die das angelleinenseitige Ende der Mundschnur aufnehmende Anleinöse mit einer Doppel-Öse versehen, die, um die Angelleine gelegt, einen Begrenzungs-Stopper umgreift und zugedrückt ist. Dadurch wird eine ebenfalls leicht gängige Anlein-Verbindung geschaffen, die einfacher aufgebaut ist, wobei die kugelförmige Verdickung des Begrenzungs-Stoppers als Gelenk-Kugel dient, wobei es sich von selbst versteht, daß diese Bewegbarkeit auch mit einer Zylinderform der Stopper erreichbar ist. In Richtung der Angelleine sind die Mundschnüre durch die Stopper bzw. die Stopper-Paare gegen Verschiebungen fixiert, so daß der Abstand der Mundschnüre untereinander durch gefangene Fische nicht verändert werden kann. Dabei ist der Abstand der Mundschnüre durch den Abstand der Stopper bzw. der Stopper-Paare vorgegeben, der größer als die Länge der Mundschnüre ist; bei sehr langen Mundschnüren bleiben Stopper zwischen den mit Mundschnüren belegten unbelegt. So wird ein Verheddern der Mundschnüre allein schon durch ihren Abstand voneinander wirksam verhindert.

Durch den Vorschlag, die Mittel zum Anleinen der Mundschnur als um die Angelleine frei drehbare Anleinöse auszubilden, in der die Mundschnur mit ihrem verdickten Kopf wiederum frei verdrehbar eingehängt ist, wird zum einen eine Bewegbarkeit erreicht, die sowohl um die Achse der Angelleine als auch um die der Mundschnur je 360° beträgt, zum anderen aber auch eine leichte und einfache Austauschbarkeit, der in der Praxis an Bord eines Schiffes eine erhebliche Bedeutung zukommt.

Als Mittel zur Befestigung des Hakens an der Mundschnur wird vorteilhaft an deren hakenseitigen Ende eine Verdickung vorgesehen, die einen im wesentlichen axial gerichteten, das freie Ende eines Vorfaches drehbar aufnehmenden Kanal aufweist, wobei das mundschnurseitige Ende des Vorfaches eine Verdickung aufweist und das hakenseitige Ende mit dem Angelhaken verbunden ist. Damit wird erreicht, daß der Zug am Fanghaken über das Vorfach etwa axial in die Mundschnur eingeleitet wird. Vorteilhaft ist dabei, wenn der der Mundschnur zugewandte Teil des Vorfaches vorzugsweise durch einen verringerten Durchmesser eine geringere Bruchfestigkeit aufweist als die Mundschnur. Fertigungstechnisch ist es vorteilhaft, wenn die Richtung des das Vorfach führenden Kanals mindestens 6°, höchstens 15° von der Richtung der Achse der Mundschnur seitlich abweicht. Auch bei dieser Winkelstellung ist die Krafteinleitung noch hinreichend axial, so daß diese Abweichung wegen ihrer fertigungstechnischen Vorteile diese Ausführungsform begünstigt. In dieser Ausführung bildet das Vorfach eine bei übergroßen Kräfte ansprechende Sollbruchstelle, die reißt, bevor die Mundschnur zu Bruch geht.

Eine sehr wirtschaftliche Herstellung ist durch Spritzgiessen gegeben, wobei der Einsatz monofiler Kunststoff-Mundschnüre das Verbinden auch im Spritzgießverfahren erlaubt. Auch hier gilt, daß die glatten monofilen Drähte mit den Stoppern bzw. den Stopper-Paaren umspritzt werden. Auch hier gilt, daß die glatten monofilen Drähte wegen ihrer glatten Oberfläche keine Gerüche annehmen und we gen ihrer Transparenz für die zu fangenden Fische nicht erkennbar sind. Durch die Kunststoff-Verwendung wird ebenfalls vorteilhaft die Verdickung mit dem Kanal am hakenseitigen Ende der Mundschnur an ihr freies Ende angespritzt, wobei das Vorfach nach dem Spritzgießen in den Kanal eingeführt und mit der mundschnurseitigen Verdickung versehen wird, und wobei der Durchmesser der Verdickung größer als der Durchmesser des Kanals ist, was spritztechnisch durch Folgeschritte mit Schrumpfung erreicht wird.

Ist die Verdickung mit dem Kanal an dem hakenseitige Ende der Mundschnur an ihr freies Enden angespritzt, kann das Vorfach nach dem Spritzgießen in den Kanal eingeführt und mit der mundschnurseitigen Verdickung versehen werden, wobei der Durchmesser der Verdickung größer ist, als der Durchmesser des Kanals. Die Verdickung wird dabei so angespritzt, daß sich das aufgespritzte Material im Sinne einer Copolymerisation mit dem Material der Mundschnur chemisch verbindet; es versteht sich von selbst, daß diese Technik auch bei dem Anspritzen der verdickten Köpfe angewandt werden kann. Dieses Vorgehen entspricht dem im Zusammenhang mit der Ausbildung des leinenseitigen Teils vorher beschriebenen Vorgehen.

Das Wesen der Erfindung wird beispielhaft an Hand der Figuren 1 bis 11 näher erläutert; dabei zeigen
- Fig. 1:: Angelleine (geschnitten und abgebrochen) mit Mundschnüren, angeleint mit Doppel-Stopper:
- Fig. 2:: Angelleine (geschnitten und abgebrochen) mit Mundschnüren, angeleint mit Einfach-Stoppern;
- Fig. 3:: Wirbel mit nach außen geöffnetem Aufnahme-Kanal für das angelleinenseitige Ende der Mundschnur;
- Fig. 4:: Wirbel mit angeschlagener elastischen Drahtschlaufe mit angelleinenseitigem Ende der Mundschnur;
- Fig. 5:: Hakenseitiges Ende der Mundschnur mit Aufnahme für Vorfach mit Fanghaken;
- Fig. 6:: Trommelwinde mit Angelleinen-Führung und Gleitschiene für die Fanghaken an Bord eines Schiffes (schematische Seitansicht);
- Fig. 7:: Trommelwinde entsprechend Fig. 6 (schematische Aufsicht);
- Fig. 8:: Einzelheit der Hol- und Ausbringvorrichtung in Seitansicht (schematisch);
- Fig. 9:: Einzelheit Angelleinen- Hol- und Umlenkrolle;
- Fig. 10:: Einzelheit der mit Fanghaken-Magazinen besetzten Stirnscheibe;
- Fig. 11:: Schnitt XI-XI (Fig. 10) durch ein Fanghakenmagazin.

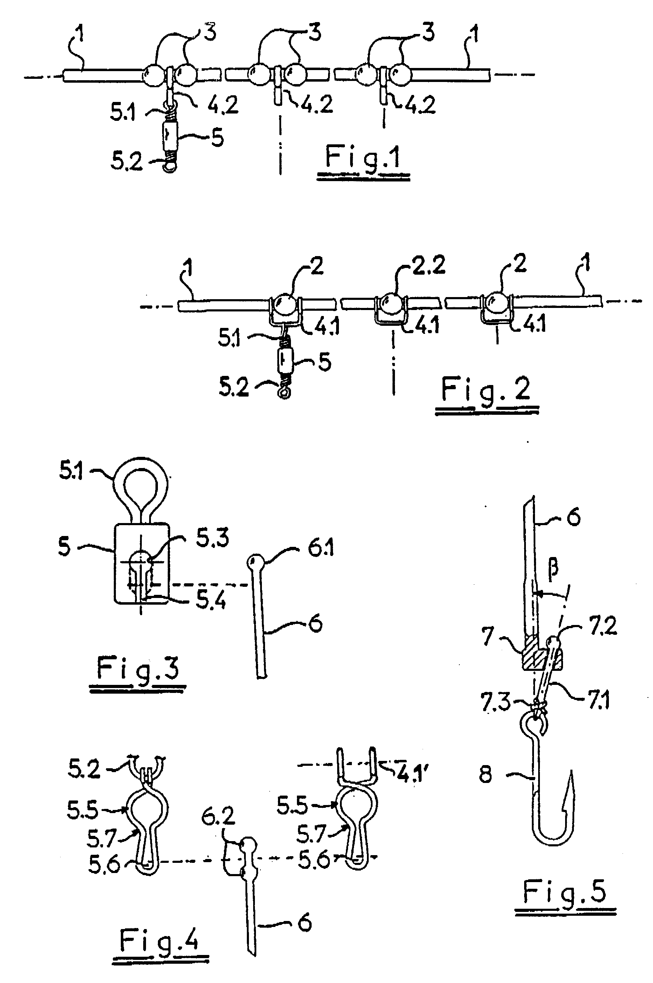

Die Figuren 1 und 2 zeigen zwei verschiedene Ausführungsformen des Anschlagens der Mundschnüre 6 an die Angelleine 1; bei der einen Ausführungsform (Fig. 2) ist für jede Mundschnur 6 ein kugliger Stopper 2 vorgesehen, der vorzugsweise auf die monofile Kunststoff-Angelleine 1 aufgespritzt mit dieser in fester Verbindung steht, an den die Mundschnur 6 über einen Wirbel 5 angeschlagen ist, der seinerseits angelleinenseitig eine Doppelöse 4.1 aufweist, die den Stopper 2 beidseitig umgreift, und die bei dem Anschlagen der Mundschnur 6 zugedrückt wird. In der Figur 1 ist der entsprechende Sachverhalt dargestellt, jedoch weist hier die Angelleine 1 zwei in kurzem Abstand voneinander angeordnete Stopper als Stopper-Paar 3 auf, zwischen denen die mit dem Wirbel 5 verbundene Einfach-Öse 4.2, mit der die Mundschnur angeschlagen ist, die Angelleine 1 umgreift, die nach dem Anleinen der Mundschnur 6 zugedrückt ist. Um im Falle eines Ausfalles des Wirbels austauschen zu können, wird die Doppel- oder die Einfach-Öse aufgedrückt oder aufgeschnitten, so daß die komplette Mundschnur 6 von der Angelleine 1 abgenommen werden kann.

Die Figuren 3 und 4 zeigen zwei Ausführungsformen der Verbindung des angelleinenseitigen Endes der Mundschnur 6 mit dem ihm zugeordneten Ende des Wirbels 5, dessen anderes Ende 5.1 mit der Einfach- oder der Doppel-Öse 4.1 bzw. 4.2 verbunden ist. Bei der ersten Ausführungsform ist der Wirbel 5 mit einer Wirbelhülse versehen, die einen nach außen geöffneten Schlitz 5.4, dessen oberes Ende mit einer Erweiterung 5.3 versehen ist, aufweist. Durch diesen Schlitz 5.4 kann die (seitlich herausgezeichnete) Mundschnur 6 mit ihrem verdickten Ende 6.1 eingeführt werden. Im Inneren der Hülse des Wirbels 5 ist (wie gestrichelt angedeutet) ein erweiterter Hohlraum vorgesehen, der diese Verdickung aufnimmt und wegen der engen Schlitzweite festhält. Die Mundschnur 6 selbst wird durch den kanalartige Grund dieses Schlitzes nach außen geführt. Hierbei wirkt die eingesetzte Mundschnur 6 selbst als drehbarer Teil des Wirbels. Bei der anderen Ausführungsform nach der Fig. 4 ist an dem (nicht näher dargestellten) Wirbel mit seiner mundschnurseitigen Drehöse 5.2 oder direkt an der Angelleine (rechter Bildteil) eine Anleinöse 5.5, die als elastische Drahtschlaufe ausgebildet ist, angeschlagen. Zum direkten Anschlagen sind die die Drahtenden, die zur Befestigung an der mundschnurseitigen Drehöse 5.2 des Wirbels um diese gebogen sind, als Leinenösen 4.1' geformt, die die Angelleine entsprechend der Doppelöse 4.1 umgreifen, und die zum Festlegen zugedrückt werden. Die Anleinöse 5.5 weist eine Einschnürung 5.7 auf, die eine Mundschnur-Aufnahme 5.6 abteilt; damit erhält die Drahtschlaufe die Form eines eingeschnürten Tropfens. Die (seitlich herausgezeichnete) Mundschnur 6 besitzt bei dieser Ausführungsform an ihrem angelleinenseitigen Ende zweckmäßigerweise zwei in kurzem Abstand voneinander angeordnete Verdickungen 6.2 mit einem Verbindungsteg, der im wesentlichen der Mundschnur entspricht. Mit diesem Zwischensteg wird dieses Ende der Mundschnur 6 in die Anleinöse 5.5 eingehängt, deren Durchmesser so bemessen ist, daß die endständige Verdickung durchgeführt werden kann. Die Weite der Einschnürung ist kleiner als der Durchmesser des Zwischensteges, die Mundschnur 6 muß gegen die elastische Kraft in die Mundschnur-Aufnahme 5.6 eingeführt werden. Dadurch wird verhindert, daß die Mundschnur 6 aus der Mundschnur-Aufnahme heraus gleitet. Die Ausbildung mit zwei Verdickungen 6.2 begrenzt ein Durchziehen der Mundschnur 6 durch die Mundschnur-Aufnahme 5.6. Zum Auswechseln der Mundschnur 6 bedarf es hier keinerlei Werkzeug; in beiden Fällen erfolgt der Wechsel über einfaches Aushängen der Verdickungen aus dem Wirbelkörper bzw. der Anleinöse.

Die Figur 5 zeigt eine Anbringungsmöglichkeit des Fanghakens 8 an dem hakenseitigen Ende der Mundschnur 6. Hierfür ist an diesem Ende eine Verdickung 7 vorgesehen, durch die ein (nicht näher bezeichneter) Kanal mit einem Winkel β zur Achse der Mundschnur 6 geführt ist, der das (verkürzt dargestellte) Vorfach 7.1 aufnimmt. Das mundschnurseitige Ende des Vorfaches 7.1 weist dabei eine Verdickung 7.2 auf, deren Durchmesser größer ist als der Durchmesser des Kanals, so daß bei eingesetztem Vorfach dieses nicht wieder entfernt werden kann. Diese Verdickung 7.2 befindet sich entweder von vornherein am Vorfach, dessen freies Ende zum Anschlagen des Fanghakens durch den Kanal geführt wird, oder es wird nachträglich z.B. durch Aufschmelzen angeformt. Auch ist es möglich, die Verdickung 7 der Mundschnur 6 anzuspritzen, wobei der Kanal mit ausgeformt wird, und im Folgeschritt das Vorfach mit seiner Verdickung. An dem Vorfach 7.1 wird der Fanghaken 8 in üblicher Weise mit einem Knoten 7.3 angebunden.

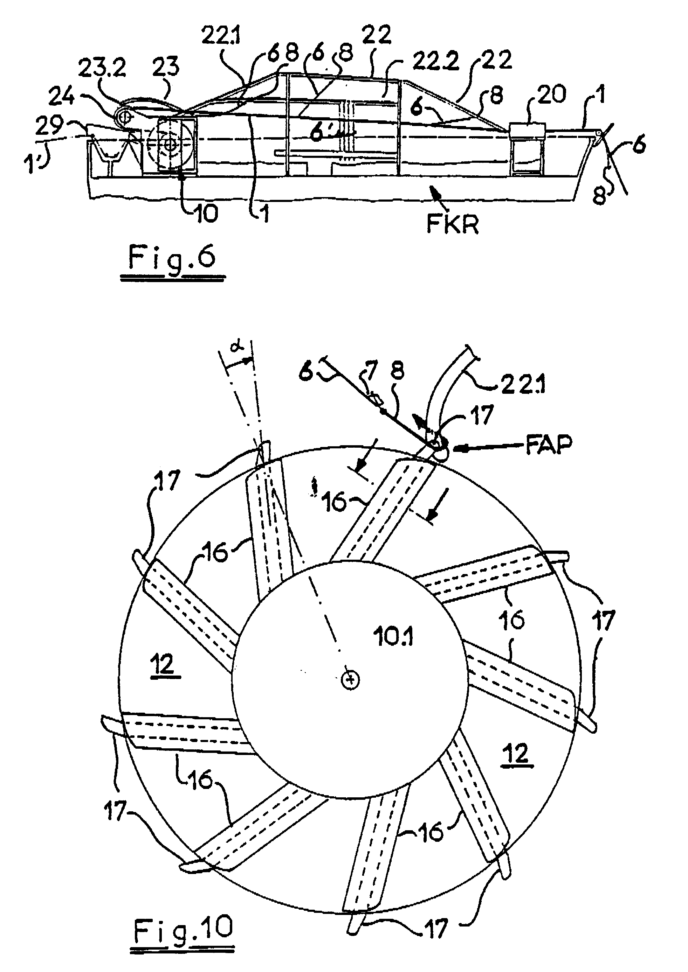

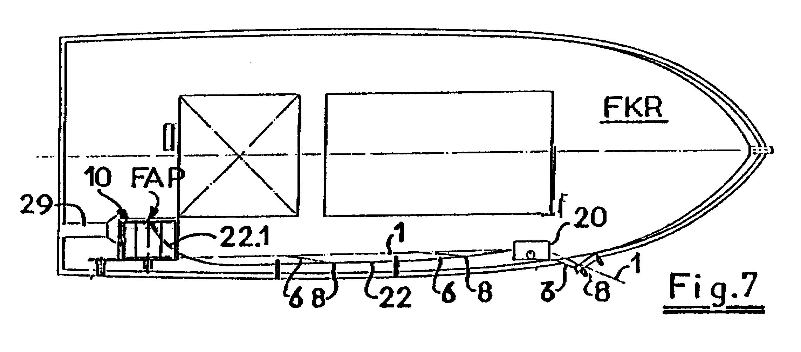

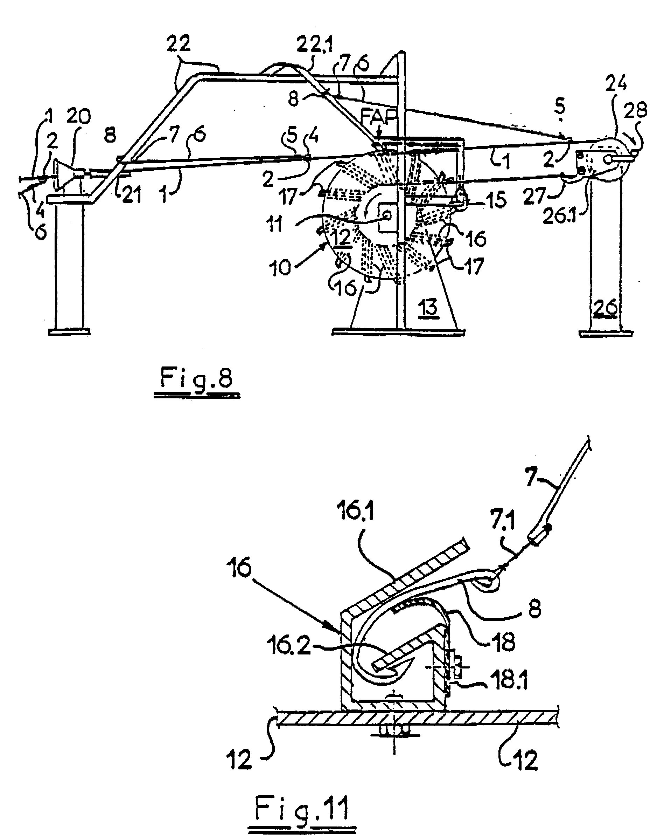

Die Figuren 6 und 7 zeigen die Situation an Bord eines als Fischkutter FKR dargestellten Fangschiffes, wobei dieses nur schematisch angedeutet ist. Bugseitig wird die Angelleine 1 eingeholt und durch den Separator mit Einlauf 20 und Führungsrohr 21 (Fig. 8) geführt, in dem gefangene Fische abgenommen und in die (nicht näher bezeichneten) Laderäume überführt werden, und in dem die Fanghaken 7 so ausgerichtet werden, daß sie von der Fanghaken-Leitschiene übernommen werden können. Die geholte Angelleine 1 wird an der Steuerbordseite nach achtern geführt, zu der Angelleinen-Hol- und -Umlenkrolle 24. Infolge des Zuges gleiten die von der Fanghaken-Leitschiene 22 aufgenommenen Fanghaken 7 an dieser entlang und spannen dabei die sie mit der Angelleine 1 verbindenden Mundschnüre 6. Dabei liegt die Fanghaken-Leitschiene 22 so hoch über einer (nicht näher bezeichneten) Arbeitsplattform, daß eine parallel zu der Fanghaken-Leitschiene 22 liegende Magazin-Schiene 22.2 mit Reserve-Mundschnüren 6' erreichbar ist und bei Bedarf während des Holens der Angelleine 1 gebrochene oder sonstwie beschädigte Mundschnüre 6 in einfacher Weise ausgetauscht werden können. Die Fanghaken-Leitschiene 22 wird in den Fanghaken-Leitbogen 22.1 überführt, der -wie aus Fig. 7 deutlich zu erkennen- die Trommelwinde 10 im Bogen quert, um an der der Angelleinen-Seite abgewandten Stirnscheibe 12 (Fig. 8) der Trommelwinde 10 so zu münden, daß sein Ende in einer Ebene unmittelbar neben der, in der die Fanghaken-Greifer 17 (Fig. 8) angeordnet sind, liegt. Auf diese Weise werden die Fanghaken 8 gewendet und so an die Fanghaken-Greifer 17 herangeführt, daß diese die Fanghaken übernehmen und in die Fanghaken-Magazine 16 (Fig. 8) fördern können. Der Einsatz einer synchron zu der Trommelwinde 10 angetriebenen Angelleinen- Hol- und Umlenkrolle 24 hat den weiteren Vorteil, daß das Einholen der Angelleine 1 und das Wieder-Ausbringen der Angelleine 1', das vorteilhaft -wie in Fig. 6 und 7 dargestellt- heckseitig über eine Ausbringeinrichtung 29 nach dem Beködern erfolgen kann, ohne den Drehsinn der Trommelwinde 10 zu ändern.

Die Figur 8 zeigt eine Gesamtansicht der Vorrichtung von der Seite, wobei diese in ihrem Zusammenwirken ohne Rücksicht auf die räumliche Anordnung dargestellt ist. Die Angelleine 1 wird eingeholt, die gefangenen Fische werden abgenommen. Diese so von Fischen befreite Angelleine 1 wird durch einen bordfesten Hakenseparator mit Einlauf 20 und Führungsrohr 21 gezogen, in dem die an den Mundschnüren 6 hängenden Fanghaken 8 ausgerichtet und so durch das Führungsrohr 21 der Fanghaken-Leitschiene 22 zugeführt werden, daß diese von der ebenfalls bordfesten Fanghaken-Leitschiene 22 übernommen und auf diese infolge des Zuges der Angelleine 1 geleitet werden, dabei wird die Mundschnur 6 von der Angelleine 1 abgespreizt. An die Fanghaken-Leitschiene 22 schließt sich der über die Vorrichtung geführte Fanghaken-Leitbogen 22.1 an, der die längs der Schiene bzw. des Bogens geführten Fanghaken 9 zu der Fanghaken-Übernahmestelle FAP unmittelbar am Umfang der Stirnscheibe 12 der Trommelwinde 10 bringt. Die Mundschnur 6 ist dabei -wie dargestellt- von dem auf dem Fanghaken-Leitbogen 22.2 gleitenden Fanghaken 8 gespannt und wird so geführt, daß die sich bildenden Schlaufe der Mundschnur 6 vor der Angelleinen-Holrolle 24 nicht zur freien Seite hin ausweichen kann, sondern zur freien Seite der Angelleinen-Holrolle ausgerichtet verbleibt, bis sie in deren Bereich von der Mundschnur-Schlaufenfalle 28 übernommen und auf der freien Seite der Angelleinen-Holrolle 24 an dieser vorbeigeführt wird. Im Auslauf der Angelleinen-Holrolle 24 ist ein weiterer Führungsfinger 27 für die Angelleine 1 vorgesehen, der ggf. unter Federspannung stehend, die ständige Spannung der Angelleine 1 aufrecht erhält. Die Angelleine 1 wird danach von der Trommelwinde 10 übernommen, die in einem bordfesten Gestell 13 drehbar gehalten ist. Auf die Darstellung der Antriebe von Angelleine-Holrolle 24 und Trommelwinde 10 wurde der Übersichtlichkeit halber verzichtet. Der Trommelwinde 10 vorgeschaltet ist eine an dem Gestell 13 mit befestigte Legevorrichtung 15, mit deren Hilfe die Angelleine 1 geordnet auf die Aufwickeltrommel 10.1 der Trommelwinde 10 aufgelegt wird. Die eine der Stirnscheiben 12 der Trommelwinde 10 ist mit in radialer Richtung verlaufenden Magazinen 16 versehen, deren Magazinkörper gegen die Richtung der Durchmesser derart geneigt ist, daß das äußere Ende gegenüber den an der Aufwickeltrommel 10.1 anliegenden inneren Enden in Drehrichtung voreilt. Über den Umfang der Stirnscheibe 12 hinaus ragen die Fanghaken-Greifer 17, die aus einem inneren, schräg durch den Körper des Magazins 16 geführten Steg 16.2 (Fig. 11) erwachsen.

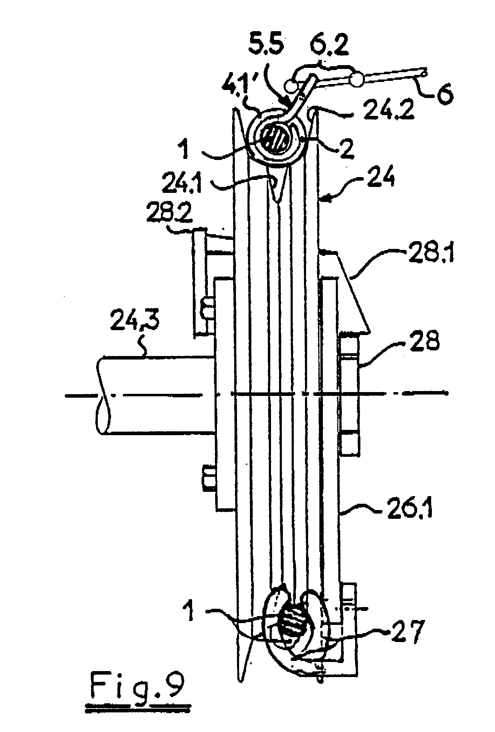

Die Figur 9 zeigt eine Ansicht der Angelleinen-Hol- und Umlenkrolle 24 aus einer zwischen ihr und der Trommelwinde 10 verlaufenden senkrechten Ebene, wobei zur Vereinfachung der Darstellung Gestell und Antrieb weggelassen wurden. Die mit ihrer Achse 24.1, die die antreibende Welle beispielsweise enthalten oder von ihr als Antriebshülse umgeben sein kann, einseitig bordfest gelagerte Angelleinen- Hol- und Umlenkrolle 24, die mittels eines Antriebes angetrieben ist und zu der die Trommelwinde 10 synchron mitläuft (ggf. mit eigenem Antrieb), besitzt auf ihrem Umfang eine innere, spitzwinklige Keilnut 24.1 und eine äußere Keilnut 24.2, die mit einem stumpfwinkligen Übergang, der auch konkav ausgeformt sein kann, ineinander übergehen. Die Angelleine 1 liegt im Bereich dieses Überganges. Mit dieser Ausbildung der Holrolle 24 wird erreicht, daß sich die Angelleine 1 selbst nicht verklemmen kann, und daß die knotenförmigen Stopper 2 bzw. 3 die Holrolle 24 ohne Schwierigkeiten passieren können, selbst mit den an die Einfach- oder Doppelösen 4 angesetzten Anleinösen 5.5, an die die Mundschnur 6 angeschlagen ist, und die von den über den Fanghaken-Leitbogen gleitenden Fanghaken gespannt gehalten und zur "freien'' Seite der Holrolle 24 ausgelenkt wird. Die Mundschnurschlaufenfalle 28 übernimmt dann mit dem Finger 28.1 die Mundschnurschlaufe, und wird gegen die Kraft seiner (nicht näher dargestellten) Feder mitgenommen, dabei wird die Mundschnur nun durch die Federkraft weiter gespannt. Die Schlaufenfalle 28 kehrt nach dem Abgleiten der Mundschnur-Schlaufe von dem Finger 28.1 infolge der Federkraft wieder in ihre Ausgangslage zurück. Zusätzlich kann der Finger an seinem der einseitigen Lagerung zugewandten Ende mit einer Nase 28.2 versehen sein, die im Falle einer Störung ein Abgleiten in falscher Richtung sicher unterbindet. Die auslaufende Angelleine 1 wird von dem Angelleinen-Leitfinger 29 geführt, der auch mit Federbelastung versehen sein kann, um die Spannung der Angelleine 1 aufrecht zu erhalten. Die aus dem Angelleinen-Leitfinger 29 austretende Angelleine 1 läuft über die Legeeinrichtung 15 zu der Trommelwinde 10 (Fig. 8).

Die Figuren 10 und 11 zeigen schließlich Einzelheiten der Anordnung sowie des Aufbaues der Fanghaken-Magazine 16: Jedes der Magazine 16 ist auf der Innenseite der, der Antriebs- und Angelleinen-Führungsseite abgewandten Stirnscheibe 12 der Trommelwinde 10 angeordnet (von der Aufwickeltrommel gesehen und daher mit gegenüber Fig. 8 umgekehrtem Drehsinn dargestellt). Die peripheren Enden der Magazine 16 eilen, gegenüber ihren an der Aufwickeltrommel 10.1 der Trommelwinde 10 anliegenden Fußenden in Drehrichtung der Trommelwinde 10 gesehen, um einem Winkel von etwa 15° bis 30° vor. Jedes Magazin 16 ist labyrinthartig geformt, wobei der äußere Schenkel 16.1 schräg nach außen weisend den die Fanghaken 8 aufnehmenden Magazinspalt begrenzen und die Fanghaken 7 mit ihrer Schaftkrümmung an der Innenseite dieses Schenkels 16.1 anliegen. Ein etwa parallel zu diesem äußeren Schenkel 16.1 liegender, innerer Schenkel 16.2 bildet den Steg, der mit seinem freien Ende die Aufnahme für die Fanghaken, deren hakenförmige Teile sich hinter diesen inneren Schenkel 16.2 legen, bildet, und dessen nach außen weisendes Ende aus dem Magazin 16 herausgeführt und als Fanghaken-Aufnahme 17 ausgebildet ist. Um ein sicheres Klemmen der magazinierten Fanghaken 8 zu erreichen, wird vorteilhaft ein elastischer Streifen 18 an der dem inneren Schenkel 16.2 zugeordneten Außenwand des Körpers des Magazins 16 befestigt, dessen freies Ende in den von dem äußeren Schenkel 16.1 begrenzten Aufnahmespalt ragt und sich aufgrund der elastischen Kräfte lippenartig gegen dessen Innenseite bzw. gegen die bereits magazinierten Haken legt und so deren Klemmung bewirkt. Das kastenförmige Profil, das der Fanghakengröße angepaßt sein muß, kann mittels der Verschraubung bei Bedarf zum Übergang von einer Magazin-Größe zu einer anderen von der Stirnscheibe 12 abgenommen und das neue Magazin aufgeschraubt werden. Vorteilhaft ist eine zweischalige Ausbildung, die ein Anpassen der Magazingröße ohne Austausch gestattet.

## Patentansprüche

1. Vorrichtung zum Aufbewahren, Ausbringen und Aufwickeln einer insbesondere monofilen Angelleine (1) für Langleinenfischerei an Bord eines Fangschiffes mit angetriebener Trommelwinde (10), Vereinzelung für Mundschnur (6) mit Haken (8) und auf einer der Stirnseiten (12) der Trommelwinde (10) vorgesehenen Hakenmagazinen (16), und mit einer Angelleine (1) mit einer Vielzahl von in Abständen zueinander angeordneten, insbesondere kugelartigen Stoppern oder Stopper-Paaren (2; 3), in deren Bereich Mundschnüre (6) in entsprechender Anzahl mit je einem Vorfach (7) mit Fanghaken (8) angeschlagen sind, wobei jede Mundschnur (6) mit Mitteln zum Anleinen an die Angelleine (1) versehen ist sowie Mittel zum Anschlagen des Vorfaches mit Haken (7, 8) aufweist, die Angelleine (1) über mindestens eine Umlenkrolle (24) und Legeeinrichtung (15) und die Fanghaken (8) über eine Fanghaken-Leitschiene (22, 22.1) geführt sind, wobei die Fanghaken-Leitschiene (22, 22.1) eine einem manuellen Eingriff zugängliche Pufferstrecke für die Mundschnüre bildet und den Fanghaken-Separator (20) und den Fanghaken-Abgreifpunkt (FAP) miteinander verbindet.

2. Vorrichtung nach Anspruch 1, **dadurch gekennzeichnet**, daß Fanghaken-Separator (20) und Umlenkrolle (24) für die Angelleine (1) in Bezug auf den Fanghakenabgreifpunkt (FAP) verschiebbar sind.

3. Vorrichtung nach Anspruch 1 oder 2, **dadurch gekennzeichnet**, daß die Angelleinen-Umlenkrolle (24) als angetriebene, mit einer Rille versehene Angelleinen- Hol- und Umlenkrolle (24) ausgebildet ist, wobei die Trommelwinde (10) synchron zur Angelleinen-Hol und Umlenkrolle 24 mitläuft, vorzugsweise mit eigenem Antrieb, und wobei vorzugsweise die Rille der Angelleinen-Hol- und Umlenkrolle (24) eine innere Keilrinne (24.1) und eine äußere Keilrinne (24.2), beide spitzwinklig, aufweist, wobei die Öffnung der inneren Keilrinne (24.1) höchstens dem Durchmesser der Angelleine (1) und die Öffnung der äußeren Keilrinne (24.2) mindestens dem Durchmesser der Stopper (2) entspricht.

4. Vorrichtung nach einem der Ansprüche 1 bis 3, **dadurch gekennzeichnet**, daß der Angelleinen-Hol- und Umlenkrolle (24) eine federkraftbelastete, ausklinkbare Mundschnur-Schlaufenfalle (28) und ein Angelleinen-Leitfinger (29) nachgeschaltet sind, wobei die als Angelleinenspeicher mit Fanghakenmagazin (16) ausgebildete Trommelwinde (10) mit der Holrolle (24) über einen Antrieb oder getrennte Antriebe synchronisiert zusammenwirken.

5. Vorrichtung nach einem der Ansprüche 1 bis 4, **dadurch gekennzeichnet**, daß jedes der Hakenmagazine (16) mit einem Längsschlitz versehen ist, und einen labyrinthartigen Querschnitt aufweist und dessen Hakensitz durch zwei Schienen (16.1, 16.2) gebildet ist, von denen eine im Körper des Fanghaken-Magazins (16) verläuft.

6. Vorrichtung nach Anspruch 6, **dadurch gekennzeichnet**, daß die eine der Doppelschienen, vorzugsweise die äußere (16.2) starr ausgebildet und in Richtung des Schaftes des Fanghakens (8) geneigt ist, wobei deren äußeres übergreifendes Ende den Hakenabgreifpunkt der Leitschiene berührt, während die andere der Doppelschienen, vorzugsweise die innere (16.2), zumindest im Bereich der Überlappung eine elastische Lippe (16.3) aufweist, deren elastische Kraft klemmend auf den Schaft der Fanghaken (8) wirkt, wobei vorzugsweise die Doppelschienen zwei Schalen des Fanghakenmagazins (16) bilden, wobei beide Schalen zum Anpassen des Magazines (16) an die Größe der zu magazinierenden Fanghaken (8) gegeneinander verschiebbar und in der gewünschten Position festlegbar sind.

7. Vorrichtung nach einem der Ansprüche 1 bis 6, **dadurch gekennzeichnet**, daß die Mittel zum Anleinen der Mundschnüre (6), als Anleinschlaufen (5.5) ausgebildet, deren angelleinenseitigen Enden je eine Öse (4.1') bilden, die die Angelleine (1) als Doppelösen beidseits eines Stoppers (2) bzw. als Einfachöse (4.2) zwischen den Stoppern eines Paares (3) umgreifen, und die an ihrem entgegengesetzten Ende eine Aufnahme für das angelleinenseitige, mit mindestens einem verdickten Kopf (6.1; 6.2) versehenen Ende der Mundschnur (6) aufweisen, wobei die Anleinöse (5.5) als elastische Drahtschlaufe zum Einhängen der Mundschnur ausgebildet, etwa die Form eines eingeschnürten Tropfens aufweist, mit einer Bauchöffnung größer als der verdickte Kopf (6.1; 6.2) des angelleinenseitigen Endes der Mundschnur (6), mit einer Einschnüröffnung (5.7) kleiner als der Durchmesser der Mundschnur (6), und mit einer Spitzenöffnung (5.6) größer als der Durchmesser der Mundschnur (6), jedoch kleiner als deren verdickter Kopf (6.1; 6.2).

8. Vorrichtung nach Anspruch 7, **dadurch gekennzeichnet**, daß die Anleinöse (5.5) in sich abgewinkelt ist.

9. Vorrichtung nach Anspruch 7 oder 8, **dadurch gekennzeichnet**, daß als Mittel zum Befestigen des Vorfachs (7.1) mit Fanghaken (8) an der Mundschnur (6) an deren hakenseitigen Ende eine Verdickung (7) vorgesehen ist, die einen im wesentlichen axial gerichteten Kanal aufweist, in dem das freie Ende eines Vorfaches (7.1) drehbar geführt ist, dessen mundschnurseitiges Ende eine Verdickung (7.2) aufweist und dessen hakenseitiges Ende (7.3) mit dem Angelhaken (8) verbunden ist, wobei vorzugsweise die Richtung des das Vorfach (7.1) führenden Kanals mindestens 6°, höchstens 15° von der Richtung der Achse der Mundschnur (6) seitlich abweicht.

10. Vorrichtung nach einem der Ansprüche 7 bis 9, **dadurch gekennzeichnet**, daß der der Mundschnur (6) zugewandte Teil des Vorfaches (7.1) vorzugsweise durch einen verringerten Durchmesser eine geringere Bruchfestigkeit aufweist als die Mundschnur (6).

## Claims

1. Device for storing, letting out and winding up a fishing line (1), particularly a single-stranded one, for longline fishing on board a fishing boat with a driven drum winch (10), isolator for mouth line (6) with hook (8) and hook magazines (16) provided on one of the sides (12) of the drum winch (10), and with a fishing line (1) with numerous stoppers, particularly spherical ones, or stopper pairs (2; 3) fitted at a distance from each other, in whose area mouth lines (6) of the appropriate number, each with one cast (7) with hook (8) are mounted, each mouth line (6) being provided with means for tying to the fishing line (1) as well as exhibiting means for mounting the cast with hook (7, 8), the fishing line (1) being guided over at least one guide roller (24) and laying device (15) and the hooks (8) via a hook guide rail (22, 22.1), the hook guide rail (22) forming a buffer zone for the mouth lines accessible to manual intervention and joining the hook separator (20) and the hook slide point (FAP) to one another.

2. Device according to Claim 1, characterized in that the hook separator (20) and and guide roller (24) for the fishing line (1) can be moved with respect to the hook slide point (FAP).

3. Device according to Claim 1 or 2, characterized in that the fishing line guide roller (24) is designed as a driven fishing line reeling and guiding roller (24) provided with a groove, the drum winch (10) running synchronously with the fishing line reeling and guiding roller 24, preferably with its own drive and, preferably, the groove of the fishing line reeling and guide roller (24) revealing an internal wedge-shaped groove (24.1) and an external wedge-shaped groove (24.2), both at acute angles, the opening of the internal wedge-shaped groove (24.1) corresponding at maximum to the diameter of the fishing line (1) and the opening of the external wedge-shaped groove (24.2) to at least the diameter of the stoppers (2).

4. Device according to any one of Claims 1 to 3, characterized in that a spring-loaded, unlatchable mouth line loop trap (28) and a fishing line guide finger (29) are fitted downline of the fishing line reeling and guide roller (24), the drum winch (10) in the form of a fishing line store with hook magazine (16) acting together in synchronization with the reeling roller (24) via a drive or separate drives.

5. Device according to any one of Claims 1 to 4, characterized in that each of the hook magazines (16) is provided with a longitudinal slot and has a labyrinth-shaped cross-section and the seat of the hook of which is formed by two rails (16.1, 16.2), one of which runs in the body of the hook magazine (16).

6. Device according to Claim 6, characterized in that one of the double rails, preferably the external one (16.2) is rigid in design and inclined in the direction of the shaft of the hook (8), its external projecting end touching the hook slide point of the guide rail, whilst the other double rail, preferably the internal one (16.2), reveals an elastic lip (16.3) in the area of the overlap, the elastic force of which acts with a clamping effect on the shaft of the hook (8), the double rails preferably forming two shells of the hook magazine (16), both shells being movable towards one another and capable of being fixed in the desired position for adapting the magazine (16) to the size of the hooks (8) to be stored in the magazine.

7. Device according to any one of Claims 1 to 6, characterized in that the means for tying the mouth lines (6) is in the form of a tying loop (5.5), whose ends on the fishing line side form an eye (4.1') in each case, which surround the fishing line (1) as double eyes on both sides of a stopper (2) or as a single eye (4.2) between the stoppers of a pair (3), and which at the opposite end reveal a housing for the end of the mouth line (6) on the fishing line side provided with at least one thickened head (6.1; 6.2), the tying eye (5.5) being in the form of an elastic wire loop for suspending the mouth line, exhibiting perhaps the shape of a tied drop, with a belly opening larger than the thickened head (6.1; 6.2) of the end of the mouth line (6) on the fishing line side, with a tying opening (5.7) smaller than the diameter of the mouth line (6) and with a top opening (5.6) larger than the diameter of the mouth line (6), but smaller than its thickened head (6.1; 6.2).

8. Device according to Claim 7, characterized in that the tying eye (5.5) is angled within itself.

9. Device according to Claim 7 or 8, characterized in that as a means for fastening the cast (7.1) with hook (8) to the mouth line (6) a thickened portion (7) is provided which exhibits a channel having a mainly axial direction in which the free end of the cast (7.1) can be rotated, whose end on the mouth line side reveals a thickened portion (7.2) and whose end at the hook side (7.3) is connected to the fishing hook (8), the direction of the channels guiding the cast (7.1) deviating laterally from the direction of the axis of the mouth line (6) by at lest 6°, at most 15°.

10. Device according to one of Claims 7 to 9, characterized in that the part of the cast (7.1) turned towards the mouth line preferably reveals, owing to a reduced diameter, a smaller breaking strength than the mouth line (6).

## Revendications

1. Dispositif destiné à recevoir, à dérouler et à enrouler une ligne de pêche (1) en particulier mono-filamentaire pour la pêche avec des lignes longues à bord d'un navire de pêche, comprenant un tambour de dévidoir (10) motorisé, un système d'isolement des fils de prise (6) munis d'un hameçon (8) et des magasins (16) à hameçons prévus sur l'une des faces frontales (12) du tambour de dévidoir (10), et comprenant une ligne de pêche (1) munie d'une pluralité d'arrêts ou de paires d'arrêts (2 ; 3) de forme sphérique, disposés à distance les uns des autres, au niveau desquels sont fixés des fils de prise (6) munis chacun d'un support (7) d'hameçon (8), chaque fil de prise (6) étant pourvu de moyens d'attache à la ligne de pêche (1) et présentant des moyens de fixation du support d'hameçon (7, 8), la ligne de pêche (1) étant passée autour d'au moins une poulie de renvoi (24) et d'un dispositif de mise en place (15), les hameçons étant guidés par un rail de guidage (22, 22.1), ce rail de guidage (22, 22.1) des hameçons formant une distance tampon permettant une intervention manuelle des fils de prise et reliant entre eux le séparateur (20) des hameçons et le point de saisie des hameçons (FAP).

2. Dispositif selon la revendication 1, caractérisé en ce que le séparateur (20) d'hameçons et la poulie de renvoi (24) de la ligne de pêche (1) peuvent être déplacés par rapport au point de saisie (FAP) des hameçons.

3. Dispositif selon les revendications 1 ou 2, caractérisé en ce que la poulie de renvoi (24) de la ligne de pêche forme une poulie à gorge motorisée de saisie et de renvoi (24) de la ligne de pêche, le tambour de dévidoir (10) tournant de manière synchrone avec la poulie de saisie et de renvoi (24) de la ligne de pêche, de préférence avec son propre entraînement, et la gorge de la poulie de saisie et de renvoi (24) de la ligne de pêche présentant une rainure intérieure de calage (24.1) et une rainure extérieure de calage (24.2) toutes deux à angle aigu, l'ouverture de la rainure intérieure de calage (24.1) correspondant au maximum au diamètre de la ligne de pêche (1) et l'ouverture de la rainure extérieure de calage (24.2) correspondant au moins au diamètre des arrêts (2).

4. Dispositif selon l'une des revendications 1 à 3, caractérisé en ce que la poulie de saisie et de renvoi (24) de la ligne de pêche est suivie d'un piège à boucle (28) pour les fils de prise, et par un doigt de guidage (29) des lignes de pêche (29), ledit piège (28) étant chargé par un ressort et déclenchable, tandis que le tambour de dévidoir (10) constituant stockage de lignes de pêche avec magasin (16) d'hameçons coopère de manière synchronisée avec la poulie de saisie (24) par l'intermédiaire d'un entraînement ou d'entraînements séparés.

5. Dispositif selon l'une des revendications 1 à 4, caractérisé en ce que chacun des magasins d'hameçon (16) est muni d'une fente longitudinale et présente une section de type labyrinthe, et son siège pour les hameçons est formé par deux rails (16.1, 16.2) dont l'un passe dans le corps du magasin (16).

6. Dispositif selon la revendication 5, caractérisé en ce que l'un des rails doubles, de préférence celui extérieur (16.2) qui est prévu rigide, est incliné en direction de la tige de l'hameçon (8), son extrémité extérieure en surplomb touchant le point de saisie des hameçons du rail de guidage, alors que l'autre des rails doubles, de préférence celui à l'intérieur (16.1), présente au niveau du chevauchement une lèvre élastique (16.3) dont la force élastique agit pour bloquer la tige de l'hameçon (8), les doubles rails formant de préférence deux coques du magasin (16), les deux coques pouvant être déplacées l'une par rapport à l'autre pour ajuster le magasin à la taille des hameçons (8) à mettre en magasin et pouvant être fixées dans la position souhaitée.

7. Dispositif selon l'une des revendications 1 à 6, caractérisé en ce que les moyens d'attache des fils de prise (6) sont conformés en boucles d'attache (5.5) dont les extrémités du côté de la ligne de pêche forment chacune un oeillet (4.1'), qui saisissent la ligne de pêche (1) en tant qu'oeillet double de chaque côté d'un arrêt (2) ou en tant qu'oeillet simple (4.2) entre les arrêts d'une paire (3), et qui présentent à leur extrémité opposée un logement pour l'extrémité côté ligne de pêche des fils de prise (6), munie d'au moins une tête (6.1 ; 6.2), les oeillets d'attache (5.5) étant conformés en boucles de fil élastique destinés à suspendre le fil de prise, présentant par exemple la forme d'une goutte nouée, avec une ouverture ventrale plus grande que la tête (6.1 ; 6.2) de l'extrémité côté ligne de pêche du fil de prise (6), avec une ouverture de nouage (5.7) plus petite que le diamètre du fil de prise (6), et avec une ouverture de pointe (5.6) plus grande que le diamètre du fil de prise (6), mais cependant plus petite que sa tête (6.1 ; 6.2).

8. Dispositif selon la revendication 7, caractérisé en ce que l'oeillet d'attache (5;5) est en soi coudé.

9. Dispositif selon les revendications 7 ou 8, caractérisé en ce que, comme moyen de fixation du support (7.1) de l'hameçon (8) sur le fil de prise (6), il est prévu un épaississement (7) sur son extrémité côté hameçon, qui présente un conduit orienté pour l'essentiel dans le sens axial, dans lequel l'extrémité libre d'un support (7.1) est passé de manière rotative et dont l'extrémité côté fil de prise présente un épaississement (7.2) et dont l'extrémité (7.3) côté hameçon est reliée à l'hameçon (8), la direction du conduit guidant le support (7.1) s'écartant de préférence d'au moins 6° et d'au plus 15° par rapport à la direction de l'axe du fil de prise (6).

10. Dispositif selon l'une des revendications 7 à 9, caractérisé en ce que la partie du support (7.1) qui est tournée vers le fil de prise (6) présente de préférence, par suite d'une réduction de diamètre, une résistance à la rupture plus faible que le fil de prise (6).
